# EUROPÄISCHE PATENTSCHRIFT

(11) **EP 0 920 454 B1**
(45) Veröffentlichungstag und Bekanntmachung des Hinweises auf die Patenterteilung: **10.07.2002**
(21) Anmeldenummer: 97937551.6
(22) Anmeldetag: 05.08.1997
(51) Int. Cl.: C08F 2/22

(54) **VERFAHREN ZUR HERSTELLUNG EINES PARTIKELFÖRMIGEN POLYMERISATES**
PROCESS FOR PRODUCING A PARTICULATE POLYMER
PROCEDE DE PRODUCTION D'UN POLYMERE PARTICULAIRE

(30) Priorität: 21.08.1996 DE 19633626
(43) Veröffentlichungstag der Anmeldung: 09.06.1999
(73) Patentinhaber: BASF AKTIENGESELLSCHAFT, 67056 Ludwigshafen (DE)
(72) Erfinder: MC KEE, Graham, Edmund, D-67433 Neustadt (DE); RENZ, Günter, D-67251 Freinsheim (DE); JAHNS, Ekkehard, D-69469 Weinheim (DE); KASTENHUBER, Walter, D-68229 Mannheim (DE)
(86) Internationale Anmeldenummer: EP9704254
(87) Internationale Veröffentlichungsnummer: WO9807757

(56) Entgegenhaltungen:
- EP-A- 0 037 923
- EP-A- 0 718 314
- WO-A-94/21699

## Beschreibung

Die vorliegende Erfindung betrifft ein neues Verfahren zur Herstellung eines partikelförmigen Polymerisates P eines mittleren Teilchendurchmessers d₅₀ von 0,1 bis 50 µm, bei dem aus
- einem oder mehreren Monomeren M, die durch radikalische Polymerisation zu dem Polymerisat P polymerisierbar sind,
- Wasser, und
- mindestens einem Schutzkolloid SK
durch Einwirkung hoher Scherkräfte eine Emulsion E hergestellt wird und in einem Reaktor die Emulsion E unter Verwendung eines radikalischen Polymerisationsinitiators RI einer Polymerisation unterworfen wird.

Außerdem betrifft die Erfindung spezielle Ausführungsformen des Verfahrens, sowie nach dem Verfahren hergestellte partikelförmige Polymerisate P und die Verwendung der Polymerisate P als Zusatzstoffe zu thermoplastischen Formmassen oder als Kopier-Toner.

Verfahren zur Herstellung von partikelförmigen Polymerisaten sind beispielsweise die Emulsionspolymerisation und die Suspensionspolymerisation. Bei der Emulsionspolymerisation werden in der Regel die Monomeren in Wasser emulgiert und unter Verwendung eines in der Wasserphase löslichen Polymerisationsinitiators und eines Emulgators polymerisiert, wobei vergleichsweise kleine Polymerpartikel von üblicherweise 30 bis 1000 nm Durchmesser entstehen. Bei der Suspensionspolymerisation suspendiert man üblicherweise die Monomeren in Wasser unter Verwendung eines Schutzkolloids, welches das Zusammenlaufen und Aneinanderkleben der Monomertröpfchen bzw. Polymerpartikel verhindert, und polymerisiert mittels eines in den Monomeren löslichen Initiators, wobei vergleichsweise große Teilchen von üblicherweise 50 bis 500 µm Durchmesser erhalten werden.

Eine Variante der Suspensionspolymerisation ist die sog. Mikrosuspensionspolymerisation. Dabei wird die Mischung aus Monomeren, Wasser und Schutzkolloid, hohen Scherkräften, erzeugt beispielsweise durch sehr schnelles und intensives Rühren, ausgesetzt, wodurch Monomertröpfchen - und daraus Polymerisat-Partikel - entstehen, deren Durchmesser mit üblicherweise 0,1 bis 50 µm deutlich kleiner ist als bei der gewöhnlichen Suspensionspolymerisation.

Ein derartiges Verfahren zur Mikrosuspensionspolymerisation von Styrol-Divinylbenzol-Mischungen beschreibt beispielsweise L. Danicher et al. in Reactive Polymers 20 (1993), S. 111-121, von Styrol-n-Butylacrylat-Mischungen M. Kamiyama in Journal of Applied Polymer Science, 50 (1993), S. 107-113.

In der DE-PS 2 618 761 ist ein solches Verfahren zur Polymerisation von Vinylchlorid offenbart.

Die EP-B 38 208 lehrt ein entsprechendes Verfahren zur Herstellung von (pigmenthaltigen) Kopier-Toner-Partikeln aus einem Vinylmonomer.

In der EP-B 443 609 und in der US-PS 4 071 670 ist ein Mikrosuspensionsverfahren zur Polymerisation von Vinylmonomeren unter Verwendung eines speziellen Hochgeschwindigkeitsrührers offenbart.

Allen diesen Verfahren ist gemein, daß zunächst die Gesamtmenge der Monomeremulsion in einem Rührkessel-Reaktor vorgelegt und dann erst die Polymerisation begonnen wird. Die Polymerisation wird demnach in Batch-Fahrweise durchgeführt.

Bei dieser Fahrweise ist die Temperaturführung der Reaktion problematisch, da - insbesondere bei Rührkesseln größeren Volumens - die durch die exotherme Polymerisation freiwerdende Reaktionswärme nur unzureichend abgeführt werden kann. Es können trotz Rühren der Reaktionsmischung sog. "hot spots" im Kessel entstehen, was zu einem uneinheitlichen Vernetzungsgrad der Polymerpartikel und einer uneinheitlichen Molmassenverteilung des entstehenden Polymeren, also zu unerwünschten Schwankungen in den Produkteigenschaften, führt.

Auch die Ausrüstung des Kessels mit - großdimensionierten und daher teuren - Kühleinrichtungen wie etwa Wärmetauschern vermag dieses Problem nicht immer zu beseitigen.

Darüberhinaus kann die schlecht kontrollierbare Wärmeabfuhr zur Folge haben, daß die Polymerisationsreaktion außer Kontrolle gerät ("Durchgehen" des Reaktors), was ein erhebliches Sicherheitsrisiko darstellt.

Der Erfindung lag die Aufgabe zugrunde, ein Verfahren bereitzustellen, das die geschilderten Nachteile nicht aufweist. Insbesondere sollte ein Verfahren geschaffen werden, das die Herstellung eines partikelförmigen Polymerisates P mit gleichbleibender Produktqualität ermöglicht.

Eine weitere Aufgabe bestand darin, ein technisch einfaches und daher ökonomisch vorteilhaftes Verfahren zur Herstellung der Polymerisate P bereitzustellen.

Außerdem bestand eine Aufgabe der Erfindung darin, ein Verfahren zu schaffen, das eine besonders sichere Fahrweise der Polymerisation ermöglicht.

Demgemäß wurde das eingangs definierte Verfahren gefunden, wobei, bezogen auf die Emulsion E, höchstens 75 Gew.-% der Emulsion E (nachfolgend als "vorgelegter Anteil von E" bezeichnet) zu Beginn der Polymerisation in dem Reaktor vorgelegt werden, und mindestens 25 Gew.-% der Emulsion E (nachfolgend als "Zulaufanteil von E" bezeichnet) erst nach Beginn der Polymerisation dem Reaktor zugeführt werden.

Außerdem wurden bevorzugte Ausführungsformen des Verfahrens hinsichtlich des Zeitraums der Zugabe des Zulaufanteils, sowie der Art der verwendeten Monomeren und Schutzkolloide gefunden.

Weitere gefundene bevorzugte Ausführungsformen betreffen die Zugabe von Zusatzstoffen, die Zugabe und Polymerisation weiterer Monomerer M*, die Art der Monomeren M*, sowie schließlich die nach dem Verfahren hergestellten partikelförmigen Polymerisate P sowie deren Verwendung als Zusatzstoffe zu thermoplastischen Formmassen oder als Kopier-Toner.

Das erfindungsgemäße Verfahren und die bevorzugten Ausführungsformen werden nachfolgend näher beschrieben.

Als Monomere M eignen sich alle Monomere, die radikalisch polymerisierbar sind, also in Gegenwart sog. "freier Radikale" polymerisieren. Als bevorzugt seien folgende Monomere M1) bis M9) genannt:
M1) C₁- bis C₁₂-Alkylester der Acrylsäure bzw. der Methacrylsäure
   Als Acrylsäurealkylester eignen sich vor allem solche, die sich vom Ethanol, vom 2-Ethylhexanol und besonders vom n-Butanol ableiten. 2-Ethylhexylacrylat und ganz besonders n-Butylacrylat sind bevorzugt. Es können auch Mischungen verschiedener Acrylsäurealkylester verwendet werden, die sich in ihrem Alkylrest unterscheiden.
   Bevorzugt sind die Acrylsäurealkylester vernetzt, wozu ein polyfunktionelles, vernetzendes Monomeres in Mengen von bis zu 10 Gew.-%, bezogen auf die Monomeren M, mitverwendet wird.
   Vernetzende Monomere sind bi- oder polyfunktionelle Comonomere mit mindestens zwei olefinischen, nichtkonjugierten Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel 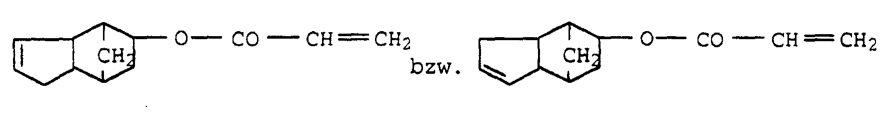 der unter dem Namen Dihydrodicyclopentadienylacrylat bekannt ist, sowie die Allylester der Acrylsäure und der Methacrylsäure.
   Als Methacrylsäurealkylester ist insbesondere Methylmethacrylat geeignet.
M2) konjugierte Diene wie Butadien, Isopren und Chloropren, weiterhin auch Norbornen und Dicyclopentadien.
M3) vinylaromatische Monomere wie Styrol, Styrolderivate der allgemeinen Formel 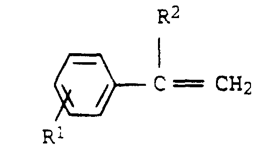 in der R¹ und R² für Wasserstoff oder C₁-C₈-Alkyl stehen.
M4) Acrylnitril, Methacrylnitril.
M5) die Glycidylester Glycidylacrylat und -methacrylat.
M6) N-substituierte Maleinimide wie N-Methyl-, N-Phenyl- und N-Cyclohexylmaleinimid.
M7) Acrylsäure, Methacrylsäure, weiterhin Dicarbonsäuren wie Maleinsäure, Fumarsäure und Itaconsäure sowie deren Anhydride wie Maleinsäureanhydrid.
M8) Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid.
M9) aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat.
M10) ungesättigte Ether wie Vinylmethylether.

Die unter M1) bis M10) angeführten Monomere können alleine oder in Mischung miteinander polymerisiert werden.

Die Monomere M1) werden bevorzugt verwendet. Besonders bevorzugt beträgt der Anteil der Monomeren M1) an der Monomermischung mindestens 50 Gew.-%. Besonders bevorzugt verwendete Monomere M1) sind Butylacrylat und Ethylhexylacrylat und deren Vernetzer, sowie Methylmethacrylat. Von den Monomeren M2) ist Butadien bevorzugt. Von den Monomeren M3) bzw. M4) seien Styrol und dessen substituierte Derivate wie α-Methylstyrol, und Acrylnitril, als bevorzugte Monomere genannt.

Welche Monomeren verwendet werden, richtet sich naturgemäß nach dem Verwendungszweck der Polymerpartikel P, welche aus den Monomeren M entstehen. Werden weiche, elastomere Partikel gewünscht, so verwendet man bevorzugt die genannten Alkylacrylate oder Diene als wesentlichen Bestandteil der Monomermischung. Werden harte Partikel gewünscht, verwendet man bevorzugt Styrol, Acrylnitril und/oder Methylmethacrylat als wesentliche Monomere.

Insbesondere die Monomere M5) bis M10) werden bevorzugt als Comonomere der Monomeren M1) bis M4) verwendet, welche die mechanischen und thermischen Eigenschaften der Polymerisat-Partikel und der Formmassen, die solche Partikel enthalten, in einem gewissen Bereich variieren.

Üblicherweise sind die Monomeren M1) bis M4) mit einem Anteil von zusammengenommenen 50 bis 100, bevorzugt 65 bis 100 und besonders bevorzugt 80 bis 100 Gew.-%, bezogen auf die Monomerenmischung, enthalten. Der Anteil der Monomere M5) bis M10) beträgt folglich in der Regel 0 bis 50, bevorzugt 0 bis 35 und besonders bevorzugt 0 bis 20 Gew.-%, bezogen auf die Monomerenmischung.

Wenn die partikelförmigen Polymerisate P als Mattierungsmittel für thermoplastische Formmassen verwendet werden sollen, können beispielsweise durch Mitverwendung von Monomeren, die saure funktionelle Gruppen (etwa die Monomere M7)) oder basische funktionelle Gruppen (etwa die Monomere M8)) enthalten, sauer oder basisch modifizierte Partikel hergestellt werden.

Wenn diese sauren bzw. basischen Partikel in einer Matrix aus einem thermoplastischen Polymeren vorliegen, die mit den Partikeln unverträglich oder teilverträglich ist, agglomerieren die Partikel aufgrund der Un- oder Teilverträglichkeit zu größeren Agglomeraten, die aus der Formteiloberfläche heraustreten. Die Formteiloberfläche erscheint dem Betrachter aufgrund der diffusen Lichtreflexion an den mikroskopischen Unebenheiten matt.

Näheres zum Begriff der Verträglichkeit von Polymeren ist beispielsweise der DE-OS 4 443 886 zu entnehmen.

Nachfolgend seien zwei bevorzugte Monomerzusammensetzungen Z aufgeführt, wobei sich die Prozentangaben auf die Gesamtmasse an Monomeren M beziehen.
- Z-1:: 90 bis 99,9, bevorzugt 95 bis 99,9 und besonders bevorzugt 97 bis 99 Gew.-% n-Butylacrylat, und
0,1 bis 10, bevorzugt 0,1 bis 5 und besonders bevorzugt 1 bis 3 Gew.-% Dihydrodicyclopentadienylacrylat.
- Z-2:: wie Z-1, wobei n-Butylacrylat ganz oder teilweise durch Ethylhyexylacrylat ersetzt ist.

Üblicherweise beträgt die Menge des Wassers, in dem die Monomeren M und die Schutzkolloide SK dispergiert werden, 25 bis 95 Gew.-%, bevorzugt 40 bis 85 Gew.-% und besonders bevorzugt 45 bis 75 Gew.-%, bezogen auf die Summe aus Monomeren, Wasser und Schutzkolloiden.

Die für die Stabilisierung der Emulsion geeigneten Schutzkolloide SK sind wasserlösliche Polymere, welche die Monomerentröpfchen und die daraus gebildeten Polymerteilchen umhüllen und auf diese Weise vor der Koagulation schützen.

Als Schutzkolloide SK eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.-%, bezogen auf die Gesamtmasse der Emulsion.

Schutzkolloide sowie Verfahren zur Herstellung von Schutzkolloiden sind an sich bekannt und beispielsweise in Encyclopedia of Polymer Science and Engineering, Vol. 16, S. 448, Verlag John Wiley, 1989, beschrieben.

Bevorzugt werden ein oder mehrere Polyvinylalkohole als Schutzkolloid verwendet, insbesondere solche mit einem Hydrolysegrad unter 96 mol-%, besonders bevorzugt 60 bis 94 und ganz besonders bevorzugt 65 bis 92 mol-%. Die bevorzugten Polyvinylalkohole haben eine Viskosität von 2 bis 100 mPa/s, insbesondere von 4 bis 60 mPa/s, gemessen als 4 Gew.-%ige Lösung in Wasser bei 20°C nach DIN 53015.

Man kann zusätzlich zu den Schutzkolloiden kolloidale Kieselsäure in Konzentration von in der Regel 0,2 bis 5 Gew.-%, bezogen auf die Menge der Dispersion, mitverwenden. Näheres zu dieser Methode, die besonders gut mit einem wasserlöslichen Polymeren aus Adipinsäure und Diethanolamin als Schutzkolloid gelingt, ist der US-A 3 615 972 zu entnehmen.

Um bei der Mikrosuspensionspolymerisation den gleichzeitig ablaufenden Emulsionspolymerisations-Prozeß, bei dem sich wesentlich kleinere und daher unerwünschte Teilchen bilden, zurückzudrängen, kann man einen wasserlöslichen Inhibitor mitverwenden, der die Emulsionspolymerisation unterdrückt. Wirksame Verbindungen dieser Art sind z.B. Chrom(+6)-Verbindungen wie Kaliumdichromat.

Aus den Monomeren M, Wasser und den Schutzkolloiden SK wird eine Emulsion bereitet, indem man hohe Scherkräfte einwirken läßt. Dazu verwendet man Homogenisatoren, die dem Fachmann bekannt sind.

Beispielhaft seien genannt:
- Labordissolver Dispermat, Fa. VMA-Getzmann, Reichshof, DE
- Ultra-Turax, Fa. Janke und Kunkel, Staufen, DE
- Druckhomogenisator, Fa. Gaulin, Lübeck, DE
- Geräte mit einem Rotor-Stator-System, etwa
   - Dispax, Fa. Janke und Kunkel, Staufen, DE
   - Cavitron-Homogenisatoren, Fa. v. Hagen & Funke, Sprochhövel, DE
   - Homogenisatoren der Fa. Kotthoff, Essen, DE
   - Homogenisatoren der Fa. Dorr Oliver,Grevenbroich, DE.

Üblicherweise betreibt man diese Geräte bei Drehzahlen von 1000 bis 25 000 min⁻¹, bevorzugt 2000 bis 25 000 min⁻¹.

Weiterhin können die hohen Scherkräfte ebenso durch
- Einwirkung von Ultraschall,
- Hindurchpressen der Mischung aus Monomeren, Wasser und Schutzkolloiden unter hohem Druck durch einen engen Spalt oder durch Düsen kleinen Durchmessers
- Kolloidmühlen
oder andere geeignete Homogenisatoren erzeugt werden.

Die Herstellung der Emulsion erfolgt üblicherweise bei Raumtemperatur, jedoch können je nach Art der Monomeren und Schutzkolloide auch höhere oder tiefere Temperaturen sinnvoll sein.

Die Herstellung der Emulsion kann entweder diskontinuierlich (Batch-Fahrweise) oder kontinuierlich erfolgen. Bei der diskontinuierlichen Herstellung werden Monomeren, Wasser und Schutzkolloide in einem Behälter vorgelegt und mittels des Homogenisators zu einer Mikrosuspension (Emulsion E) vermischt.

Der Homogenisator kann auch parallel zum Behälter angeordnet sein, und die Komponenten werden im Kreis durch den Homogenisator geführt.

Die Homogenisationsdauer kann zwischen 0,1 sec und mehreren Stunden betragen, in Abhängigkeit beispielsweise vom gewünschten Durchmesser der Monomertröpfchen und der einzustellenden Größenverteilung, vom Mischungsverhalten der Monomeren mit Wasser, von den Mengenverhältnissen an Monomer, Wasser und Schutzkolloid, und vom verwendeten Schutzkolloid.

Es ist auch möglich, die Gesamtmenge der Monomeren und die Gesamtmenge Wasser vorzulegen, und die Schutzkolloide zuzugeben, wenn der Homogenisator gestartet wird.

Bei der kontinuierlichen Herstellung der Emulsion können, in einer bevorzugten Ausführungsform, die Monomeren, Wasser und Schutzkolloide dem Homogenisator zugeführt werden und die derart hergestellte Emulsion E direkt in den Reaktor, in welchem die Polymerisation vorgenommen wird, zugeführt werden.

In einer anderen bevorzugten Ausführungsform der kontinuierlichen Emulsions-Herstellung werden Monomeren, Wasser und Schutzkolloide im Kreis durch den Homogenisator geführt und nur ein Teil der im Kreis geführten Mischung wird abgezweigt und dem Polymerisationsreaktor zugeführt. Diese Kreisfahrweise empfiehlt sich vor allem dann, wenn die Emulgierung der Monomeren nach nur einmaligem Durchsatz durch den Homogenisator noch unzureichend ist, wenn beispielsweise die Tröpfchengröße zu groß und/oder die Größenverteilung zu breit ist.

In einer weiteren bevorzugten Ausführungsform kann die fertige Emulsion E vor der Polymerisation in einem Vorratsbehälter zwischengelagert werden und aus dem Vorratsbehälter in den Polymerisationsreaktor dosiert werden. Dies ermöglicht es, Emulgierung und Polymerisation räumlich voneinander getrennt, bei einer großtechnischen Anwendung des Verfahrens beispielsweise in verschiedenen Gebäuden, vorzunehmen.

Die Herstellung der Emulsion kann in einer weiteren Ausführungsform auch in einem ersten Schritt diskontinuierlich und in einem zweiten Schritt kontinuierlich erfolgen: Die Komponenten werden wie beschrieben als Batch emulgiert, und die entstandene Emulsion danach einer zweiten kontinuierlich durchgeführten Emulgierung unterzogen. Dabei entsteht die fertige Emulsion, die kontinuierlich dem Reaktor zugeführt wird.

Vor oder während der Herstellung der Emulsion E können Zusatzstoffe zugefügt werden, die den partikelförmigen Polymerisaten P bestimmte Eigenschaften verleihen. Beispielhaft seien als solche Zusatzstoffe Polymere, Farbstoffe und Pigmente und ferromagnetische Pigmente genannt.

Als Polymere sind insbesondere solche geeignet, die in den Monomeren M löslich sind oder in den Monomeren M quellen.

Als Farbstoffe und Pigmente eignen sich die üblicherweise zur Einfärbung von Polymeren verwendeten Farbstoffe, etwa organische Farbmittel sowie Ruß, TiO₂, CaCO₃, und andere. Bei Verwendung von Ruß entstehen schwarze partikelförmige Polymerisate P, die insbesondere als Kopier-Toner Verwendung finden. Ruß oder andere schwarze Farbstoffe oder Pigmente sind bevorzugte Zusatzstoffe.

Ferromagnetische Pigmente sind als Beschichtung auf Magnetbändern (Video-, Audio- und andere Datenspeichercassetten) und Magnetfolien (Computerdisketten) enthalten. Sie sind dem Fachmann bekannt und gleichfalls als Zusatzstoffe bevorzugt.

Die Zusatzstoffe können in gelöster Form (insbesondere bei löslichen Farbstoffen), gequollener Form (insbesondere bei Polymeren), oder in suspendierter Form (bei Pigmenten und ferromagnetischen Pigmenten) zugefügt werden.

Die Zusatzstoffe werden durch den Homogenisator zumeist überaus gleichmäßig in der entstehenden Emulsion E verteilt, sodaß nach der Polymerisation die Zusatzstoffe in der Regel gleichmäßig in den Partikeln enthalten sind.

Der Anteil der Zusatzstoffe beträgt in der Regel mindestens 0,5 Gew.-%, bevorzugt mindestens 5 Gew.-% und besonders bevorzugt mindestens 10 Gew.-%, bezogen auf die dem Homogenisator zugeführte Mischung.

Die Polymerisation wird mit einem radikalischen Polymerisationsinitiator RI initiiert. Derartige Verbindungen sind dem Fachmann bekannt.

Bevorzugt sind Verbindungen mit einer Halbwertzeit von einer Stunde, wenn die Temperatur bei 60 bis 110°C liegt, und die in den Monomeren merklich löslich sind.

Insbesondere werden organische Peroxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren.

Es können auch Mischungen der genannten Initiatoren RI verwendet werden.

Bei den Peroxiden sind diejenigen mit hydrophoben Eigenschaften bevorzugt, insbesondere solche Moleküle mit einem Atomverhältnis Kohlenstoff zu Sauerstoff von größer 3:1. Ganz besonders bevorzugt sind Dilaurylperoxid und Dibenzoylperoxid, insbesondere Dilaurylperoxid.

Als Azoverbindungen werden 2,2'Azobis(2-methylbutyronitril) und 2,2'-Azobis(isobutyronitril) bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Als Monomere, die bei erhöhter Temperatur spontan polymerisieren, werden bevorzugt Styrol und dessen Derivate wie Vinyltoluol verwendet, besonders bevorzugt Styrol.

Die Menge an Initiator RI beträgt üblicherweise 0,05 bis 4, bevorzugt 0,1 bis 2 und besonders bevorzugt 0,3 bis 1 Gew.-%, bezogen auf die Menge der Monomeren M. Diese Mengenangaben gelten naturgemäß nicht für den Fall, daß das Monomer zugleich Initiator ist, wie etwa Styrol.

Je nach Aggregatzustand des Initiators und seinem Löslichkeitsverhalten kann er als solcher, bevorzugt jedoch als Lösung, Emulsion (flüssig in flüssig) oder Suspension (fest in flüssig) zugefügt werden, wodurch sich insbesondere kleine Stoffmengen Initiator präziser dosieren lassen.

Als Lösungsmittel bzw. flüssige Phase für den Initiator eignen sich organische Lösungsmittel wie beispielsweise Benzol, Toluol, Ethylbenzol und Cyclohexan, insbesondere Cyclohexan, oder auch die Monomeren selbst. Bei der Verwendung der Monomeren selbst als Lösungsmittel bzw. flüssige Phase für den Initiator wird der Initiator in der Gesamtmenge der Monomeren oder bevorzugt in einem kleineren Anteil der Monomeren gelöst bzw. emulgiert/suspendiert, und dieser Anteil dann zu den restlichen Komponenten gegeben.

Es ist auch möglich, den Initiator im Lösungsmittel oder im Monomeren zu lösen und die entstandene Lösung in Wasser zu dispergieren.

Die Menge an Lösungsmittel bzw. flüssiger Phase, in der der Initiator RI gelöst, emulgiert oder suspendiert wird, wird bevorzugt so gewählt, daß in der fertigen Lösung bzw. Emulsion/Suspension die Konzentration des Initiators mindestens 5 Gew.-%, bevorzugt mindestens 8 Gew.-% und besonders bevorzugt mindestens 10 Gew.-% beträgt.

Der oder die Initiatoren RI können vor oder nach der Herstellung der Emulsion E zugegeben werden, oder erst unmittelbar vor Beginn der Polymerisation, oder auch kontinuierlich im Verlauf der Polymerisation nachdosiert werden.

Insbesondere bei Monomeren, die zu unkontrollierter Polymerisation neigen, oder bereits bei der Temperatur der Emulsionsherstellung polymerisieren, ist es ratsam, den Initiator RI erst nach der Emulgierung, u.U. erst unmittelbar vor der Polymerisation, zuzugeben.

Insbesondere bei Polymerisationen mit einer langen Polymerisationsdauer kann es vorteilhaft sein, den Initiator, als kontinuierlichen Zulauf oder portionsweise, während der Polymerisation zuzugeben. Dabei kann die Dauer des Initiatorzulaufs von der Dauer der Polymerisation verschieden oder gleich sein.

Als weitere Zusatzstoffe können bei der Polymerisation Puffersubstanzen wie Na₂HPO₄ / NaH₂PO₄ oder Na-citrat/Citronensäure verwendet werden, um einen im wesentlichen konstant bleibenden pH-Wert einzustellen.

Weiterhin können Molekulargewichtsregler, etwa Mercaptane wie t-Dodecylmercaptan, oder Ethylhexylthioglycolat mitverwendet werden.

Diese weiteren Zusatzstoffe können kontinuierlich oder diskontinuierlich am Anfang und/oder während der Herstellung der Emulsion und/oder während der Polymerisation, zugefügt werden.

Bei dem erfindungsgemäßen Verfahren wird die Emulsion E vollständig oder teilweise im Zulaufverfahren polymerisiert.

Gemäß der Erfindung werden höchstens 75 Gew.-% der Emulsion E, bezogen auf die Emulsion E ("vorgelegter Anteil von E"), zu Beginn der Polymerisation im Reaktor vorgelegt und mindestens 25 Gew.-% der Emulsion E, bezogen auf die Emulsion E ("Zulaufanteil von E"), erst nach Beginn der Polymerisation dem Reaktor zugeführt.

Bevorzugt beträgt der vorgelegte Anteil von E höchstens 50 Gew.-% und der Zulaufanteil von E mindestens 50 Gew.-%, jeweils bezogen auf E. Besonders bevorzugt beträgt der vorgelegte Anteil von E höchstens 35 Gew.-% und der Zulaufanteil von E mindestens 65 Gew.-%, jeweils bezogen auf E. Ganz besonders bevorzugt beträgt der vorgelegte Anteil von E höchstens 20 Gew.-% und der Zulaufanteil von E mindestens 80 Gew.-%, jeweils bezogen auf E.

In einer bevorzugten Ausführungsform beträgt die Zeitspanne, in der der Zulaufanteil von E dem Reaktor zugeführt wird ("Zulaufzeit") mindestens 10 min, bevorzugt mindestens 20 min, besonders bevorzugt mindestens 30 min und ganz besonders bevorzugt mindestens 60 min.

Die Polymerisation wird in der üblichen Weise durchgeführt, indem beispielsweise der Reaktorinhalt erwärmt wird, wodurch die Polymerisationsreaktion gestartet wird. Erforderlichenfalls kann der Initiator RI auch erst dann, also zu der aufgeheizten Emulsion, zugefügt werden. Die Polymerisationstemperatur hängt u.a. von den verwendeten Monomeren und Initiatoren und vom gewünschten Vernetzungsgrad der entstehenden partikelförmigen Polymeren P ab. Im allgemeinen polymerisiert man bei 30 bis 120°C, wobei auch nacheinander verschiedene Temperaturen oder ein Temperaturgradient eingestellt werden können.

Man nimmt die Polymerisationsreaktion in der Regel unter langsamem oder mäßigem Rühren vor, bei dem (im Unterschied zur vorausgehenden Emulgierung durch hohe Scherkräfte) die Tröpfchen nicht mehr weiter zerteilt werden.

Entsprechend einer bevorzugten Ausführungsform wird die Polymerisation der Monomertröpfchen, enthaltend die Monomere M, zu Ende geführt, ohne daß weitere, von den Monomeren M verschiedene Monomere M*, zugefügt werden. Man erhält in diesem Fall partikelförmige Polymerisate P, die im wesentlichen homogen aufgebaut sind (einheitliche Verteilung der Monomerbausteine im Partikel).

In einer anderen bevorzugten Ausführungsform wird die Polymerisation der Monomeren M bis zu einem Umsatz von mindestens 25 %, bezogen auf die eingesetzten Monomeren M, geführt, wonach eines oder mehrere weitere Monomere M* zugegeben und polymerisiert werden. Dadurch entstehen partikelförmige Polymerisate P mit einem Kern-Schale-Aufbau, wobei der Kern die polymerisierten Monomeren M und die Schale die polymerisierten Monomeren M* enthält.

In der Regel, jedoch nicht zwingend, stellt die Polymerisation der weiteren Monomeren M* auf den Kern eine Pfropfungsreaktion dar, wie sie dem Fachmann geläufig ist. Die entstehenden Kern-Schale-Partikel sind dann Pfropfpartikel.

Bevorzugt führt man die Polymerisation der Monomeren M bis zu einem Umsatz von mindestens 65 %, besonders bevorzugt bis zu einem Umsatz von mindestens 80 %, jeweils bezogen auf die eingesetzten Monomeren M, bevor man die weiteren Monomeren M* zugibt und polymerisiert.

Fügt man - entsprechend einer Ausführungsform - die weiteren Monomeren M* hinzu, bevor die Monomeren M vollständig zum Polymerkern umgesetzt sind (Umsatz von M unter 100 %), polymerisieren zugleich die noch verbliebenen Monomeren M und die zugegebenen weiteren Monomeren M*. Dadurch erhält man Kern-Schale-Polymere mit einem allmählichen Übergang vom Kern (aus Monomeren M) zur Schale (aus Monomeren M*), ein sog. "verschmierter" Übergang.

Werden - in einer anderen Ausführungsform - die weiteren Monomeren M* erst nach vollständigem Umsatz der Monomeren M zugefügt und polymerisiert, werden Teilchen mit einem scharfen Übergang von Kern zu Schale erhalten.

Die weiteren Monomeren M* werden in einer Ausführungsform diskontinuierlich als einmalige oder mehrmalige Zugabe, oder in einer anderen Ausführungsform kontinuierlich als Zulauf zugegeben.

Die weiteren Monomeren M* können in einer weiteren Ausführungsform in mehreren Stufen der Polymerisation nacheinander dem Reaktor zugegeben werden, wobei sich die Monomeren M* jeder Stufe voneinander unterscheiden. Man erhält auf diese Weise Kern-Schale-Teilchen mit mehreren Schalen.

Die Monomeren M* einer Polymerisationsstufe werden bis zu einem Umsatz von mindestens 25 %, bevorzugt mindestens 65 % und besonders bevorzugt mindestens 80 %, bezogen auf die in der jeweiligen Stufe eingesetzten Monomeren M*, polymerisiert, bevor in der nächsten Polymerisationsstufe wiederum Monomere M* zugegeben werden.

Wie bereits beschrieben, ist der Übergang zwischen den einzelnen Schalen des entstehenden Kern-Schale-Teilchens umso schärfer, je vollständiger der Umsatz der Monomeren M* ist, bevor die Monomeren M* der nächsten Stufe zugefügt werden.

Bezüglich der Polymerisationsbedingungen (Temperatur, Zusatzstoffe) sei auf die Ausführungen zur Polymerisation der Monomeren M verwiesen, die sinngemäß auch für die Umsetzung der Monomeren M* gelten.

Insbesondere kann es sinnvoll sein, vor und/oder während der Polymerisation der Monomeren M* weitere Schutzkolloide SK diskontinuierlich oder kontinuierlich zuzugeben, wobei die Schutzkolloide von denjenigen, die zur Herstellung des Kerns verwendet werden, verschieden sein können. Bevorzugt werden jedoch wiederum die beschriebenen Polyvinylalkohole verwendet.

Weiterhin kann es sinnvoll sein, vor und/oder während der Polymerisation der Monomeren M* weitere radikalische Polymerisationsinitiatoren RI diskontinuierlich oder kontinuierlich zuzugeben, wobei die Initiatoren von denjenigen, die zur Herstellung des Kerns verwendet werden, gleich oder verschieden sein können.

Die Zugabe der weiteren Monomeren M* jeder Stufe kann diskontinuierlich (auf einmal) oder kontinuierlich (als Zulauf) erfolgen.

Für die Monomeren M* kommen alle Monomeren in Betracht, die für die Monomeren M genannt wurden, bevorzugt also die erwähnten Monomeren M1) bis M9). Die Monomeren M* unterscheiden sich in der ) Regel von den Monomeren M. Werden beispielsweise Monomere M verwendet, die ein elastomeres, "weiches" Polymeres ergeben, so werden als Monomere M* solche verwendet, die ein "hartes" Polymeres ergeben. Man erhält so ein partikelförmiges Polymerisat P mit weichem Kern und harter Schale. Solche Polymerisate sind bevorzugt.

Bevorzugte weitere Monomere M* sind Styrol, α-Methylstyrol, Acrylnitril, Methacrylnitril, Methylmethacrylat sowie deren Mischungen. Beispielhaft seien Polymerisate P aus einem Kern aus vernetztem Polybutylacylat und einer Schale aus Polystyrol oder Polystyrolacylnitril oder Polymethylmethacylat genannt.

Als bevorzugte Monomere M* sind weiterhin solche mit sauren und/oder basischen Gruppen zu nennen, wie sie für die Monomeren M als M6) und M7) genannt wurden. Werden solcherart funktionalisierte Monomere in die Schale(n) einpolymerisiert, so entstehen partikelförmige Polymerisate, die in einer un- oder teilverträglichen Matrix agglomerieren, was zu dem beschriebenen Mattierungseffekt führt.

Nachfolgend seien für die weiteren Monomeren M* einige bevorzugte Monomerzusammensetzungen Z* aufgeführt, wobei sich die Prozentangaben auf die Gesamtmasse an weiteren Monomeren M* beziehen.
- Z*-1:: 50 bis 99, bevorzugt 60 bis 95 und besonders bevorzugt 65 bis 95 Gew.-% Styrol und 1 bis 50, bevorzugt 5 bis 40 und besonders bevorzugt 5 bis 35 Gew.-% Acylnitril
- Z*-2:: 100 Gew.-% Styrol
- Z*-3:: 100 Gew.-% PMMA

Ebenso können partikelförmige Polymerisate mit einem harten Kern und einer weichen Schale hergestellt werden, in dem als Monomere M bzw. als Monomere M* die entsprechenden Monomere gewählt werden.

In gleicher Weise können mehrschalige Polymerisate erhalten werden, etwa des Aufbaus harter Kern - weiche Schale - harte Schale, wenn verschiedene Monomere M* wie beschrieben in mehreren Stufen nacheinander zugefügt und polymerisiert werden.

Beispielsweise erhält man durch Polymerisation von Styrol als Monomer M, n-Butylacylat (plus Vernetzer) als erstem weiteren Monomer M* und einer Styrol-Acylnitril-Mischung als zweiten weiteren Monomeren M*, Partikel aus einem harten Polystyrol-Kern, einer ersten Schale aus weichem Polybutylacylat und einer zweiten (äußeren) Schale aus hartem Polystyrolacylnitril.

Für den Fall, daß sich die Monomeren M (für den Kern) von den Monomeren M* (für die Schale(n)) nicht der Art nach unterscheiden, sind die Mengenverhältnisse der Monomeren M in der Monomerenmischung, aus welcher das Kernpolymere entsteht, verschieden von den Mengenverhältnissen der Monomeren M* in der Monomerenmischung, aus der das Schalenpolymere entsteht.

Beispielsweise können als Monomere M 80 Gew.-% n-Butylacrylat und 20 Gew.-% Styrol, und als Monomere M* 80 Gew.-% Styrol und 20 Gew.-% n-Butylacylat eingesetzt werden, was ein Teilchen mit verhältnismäßig weichem Kern und verhältnismäßig harter Schale ergibt.

Der Durchmesser der partikelförmigen Polymerisate P wird im wesentlichen durch den Durchmesser der Monomertröpfchen bestimmt, welche bei der Herstellung der Emulsion E durch hohe Scherkraft entstehen (und naturgemäß durch aufpolymerisierte Schalen, falls vorhanden).

Der mittlere Teilchendurchmesser d₅₀ der partikelförmigen Polymerisate P beträgt 0,1 bis 50 µm, bevorzugt 0,5 bis 45 µm, und besonders bevorzugt 0,5 bis 30 µm.

Die Teilchengröße läßt sich demnach im wesentlichen dadurch steuern, daß die Bedingungen bei der Herstellung der Emulsion E entsprechend gewählt und kontrolliert werden (z.B. Wahl des Homogenisators, Dauer des Homogenierens, Mengenverhältnisse Monomere:Wasser:Schutzkolloide, Fahrweise der Emulgierung (einfach, mehrfach, als Batch oder kontinuierlich, Kreisfahrweise), Drehzahl des Homogenisators etc.).

Bei der mittleren Teilchengröße d₅₀ handelt es sich um das Gewichtsmittel. Es wird beispielsweise bestimmt, indem licht- und elektronenmikroskopische Bilder angefertigt werden und die am Äquator geschnittenen Teilchen ausgemessen und ausgezählt werden.

Nach Beendigung der Polymerisation liegen die partikelförmigen Polymerisate P in Wasser dispergiert vor. Diese Dispersion kann entweder als solche weiterverarbeitet werden, oder man kann die Polymerisate P von der wäßrigen Phase abtrennen. Diese Aufarbeitung erfolgt in an sich bekannter Weise, beispielsweise durch Sieben, Filtrieren, Dekantieren oder Zentrifugieren, wobei die Polymerisatpartikel erforderlichenfalls in üblicher Weise weiter getrocknet werden können, etwa durch Warmluft, Sprühtrocknung oder mittels eines Stromtrockners.

Die mit dem erfindungsgemäßen Verfahren hergestellten partikelförmigen Polymerisate P weisen eine gleichmäßige Produktqualität auf. Weiterhin ist das Verfahren im Vergleich zur diskontinuierlichen Fahrweise der Polymerisation kostengünstiger und sicherheitstechnisch einfacher zu betreiben.

Die partikelförmigen Polymerisate P können vielfältig verwendet werden. Nur beispielhaft sei ihre Verwendung als Mattierungsmittel für thermoplastische Formmassen, als Kopier-Toner, insbesondere falls sie Farbstoffe und/oder Pigmente erhalten, und als Beschichtung für Magnetbänder und -folien, falls sie ferromagnetische Pigmente enthalten, genannt.

Die Herstellung von thermoplastischen Formmassen, welche die Polymerisate P enthalten, kann nach an sich bekannten Verfahren erfolgen, z.B. durch Einarbeiten der noch feuchten oder getrockneten Polymerisate P in die Thermoplast-Matrix oberhalb des Schmelzpunktes der Matrix, insbesondere bei Temperaturen von 150 bis 350°C, in üblichen Mischvorrichtungen, wie Extrudern oder Knetern. Es ist auch möglich, die Dispersion der Polymerisate P als solche direkt in den Thermoplasten einzuarbeiten, wobei das Dispersionswasser in üblicher Weise, etwa über Entgasungseinrichtungen als Dampf, während der Einarbeitung entfernt wird.

### Beispiele

Es wurde entionisiertes Wasser verwendet.

Als Polyvinylalkohole wurden Produkte der Fa. Hoechst, Frankfurt/M., DE, mit der Bezeichnung Mowiol® verwendet. Die erste Zahl hinter dem Markennamen gibt die Viskosität einer 4 gew.-%igen Lösung des Polyvinylalkohols in Wasser bei 20°C in [mPa/s], gemessen nach DIN 53015, an; die zweite Zahl gibt den Hydrolysegrad (Verseifungsgrad) des Polyvinylalkohols in mol-% an.

### Beispiel 1

### a) Herstellung des Kerns

In einem Behälter wurde eine Mischung aus

| | |
|---|---|
| 39,2 g | n-Butylacrylat |
| 0,8 g | Dihydrodicyclopentadienylacrylat |
| 75,0 g | Wasser |
| 8,0 g | einer 10 gew.-%igen Lösung des Polyvinylalkohols Mowiol® 8/88 in Wasser |
| 0,2 g | Dilaurylperoxid |

vorgelegt und mit einem eingetauchten Homogenisator des Typs Dispermat CV (Fa. VMA-Gelzmann), der bei einer Drehzahl von 7000 min⁻¹ 20 min lang betrieben wurde, eine Emulsion hergestellt. 10 Gew.-% dieser Emulsion wurden in einem mit Stickstoff gespülten Reaktor vorgelegt, dessen Temperatur 75°C betrug und der mit einem Blattrührer gerührt wurde (300 min⁻¹). Die verbliebenen 90 Gew.-% der Emulsion wurden bei gleicher Temperatur und Rührerdrehzahl innerhalb einer Stunde zugetropft. Man ließ noch eine weitere Stunde nachpolymerisieren.

### b) Herstellung der Schale

Zu der unter a) hergestellten Mischung wurden

| | |
|---|---|
| 12,8 g | Wasser und |
| 4,8 g | einer 10 gew.-%igen Lösung des Polyvinylalkohols wie unter a) beschrieben |

gegeben. Anschließend wurde eine Mischung aus

| | |
|---|---|
| 9,0 g | Styrol und |
| 3,0 g | Acrylnitril |

innerhalb einer Stunde bei 75°C und 300 min⁻¹ zugetropft, und noch eine weitere Stunde nachpolymerisiert.

Nach dem Abkühlen wurden vom Reaktorinhalt lichtmikroskopische Bilder angefertigt. Die mittlere Teilchengröße d₅₀, ermittelt durch Ausmessen und Zählen der am Äquator geschnittenen Teilchen, betrug 3 µm.

Die Menge an koagulierten Polymerisat-Teilchen betrug 3,4 Gew.-% (feucht), bezogen auf den gesamten Ansatz.

### Beispiel 2

Es wurde vorgegangen wie in Beispiel 1 beschrieben, jedoch wurde kein Dilaurylperoxid vorgelegt, sondern während der Polymerisation sowohl des Kerns als auch der Schale jeweils eine Lösung von 0,2 g Dilaurylperoxid in 1,8 g Cyclohexan (10 gew.-%ige Lösung von Dilaurylperoxid in Cyclohexan) in den Reaktor getropft.

Die mittlere Teilchengröße d₅₀ betrug 4 µm, und die Menge an koagulierten Polymerisat-Teilchen betrug 3,8 Gew.-% (feucht), bezogen auf den gesamten Ansatz.

### Beispiel 3

Es wurden 4 Zuläufe bereitgestellt:

| Zulauf 1: | |
|---|---|
| 700,00 g | n-Butylacrylat |
| 9,00 g | Dihydrodicyclopentadienylacrylat |
| 2,67 g | Butylperoktoat, 75 gew.-%ige Lösung in Isododecan |
| 2,00 g | Dilaurylperoxid |

| Zulauf 2: | |
|---|---|
| 180,00 g | einer 10 gew.-%igen Lösung des Polyvinylalkohols Mowiol® 40/88 in Wasser |
| 1303,83 g | Wasser |

| Zulauf 3: | |
|---|---|
| 50,00 g | einer 10 gew.-%igen Lösung des Polyvinylalkohols wie in Zulauf 2 |

| Zulauf 4: | |
|---|---|
| 225,00 g | Styrol |
| 75,00 g | Acrylnitril |
| 5,00 g | Ethylhexylthioglycolat |

Die Zuläufe 1 und 2 wurden durch einen Homogenisator des Typs Super Dispax SD41 (Fa. Janke und Kunkel) geführt und die Emulsion in den Reaktor gegeben. Der Homogenisator wurde mit einer Drehzahl von 6000 min⁻¹ betrieben. Der Reaktor wurde unter Stickstoff betrieben und mit 100 min⁻¹ gerührt.

### a) Herstellung des Kerns

Zunächst wurde 100 ml von Zulauf 2 kontinuierlich innerhalb 5 Minuten in den Reaktor gegeben. Anschließend wurden zugleich 20 Gew.-% des Zulaufs 1 und 20 Gew.-% des Zulaufs 2, innerhalb 10 min in den Reaktor dosiert, wonach innerhalb 15 min auf 74°C aufgeheizt und weitere 15 min polymerisiert wurde. Danach wurden die verbliebenen je 80 Gew.-% des Zulaufs 1 und des Zulaufs 2 innerhalb 40 min in den Reaktor dosiert. Man ließ eine weitere Stunde nachpolymerisieren.

### b) Herstellung der Schale

Die Temperatur wurde auf 78°C erhöht und Zulauf 3 (ohne Homogenisator) innerhalb 5 min zugefügt. Anschließend wurde Zulauf 4 innerhalb 2 1/2 Stunden (ohne Homogenisator) zugegeben. Man ließ eine weitere Stunde nachpolymerisieren.

Nach dem Abkühlen wurden, wie beschrieben, die Teilchengröße ermittelt. Die Partikel hatten eine Teilchengröße zwischen 2 und 15 µm. Die Koagulatmenge war gering (< 1 Gew.-% (feucht) bezogen auf den gesamten Ansatz).

### Beispiel 4

Es wurde vorgegangen wie in Beispiel 3, jedoch enthielt Zulauf 1 kein t-Butylperoktoat und kein Dilaurylperoxid. Stattdessen wurde eine Lösung der Peroxide in Cyclohexan (Zulauf 2a) bereitgestellt.

| Zulauf 2a | |
|---|---|
| 2,67 g | t-Butylperoktoat, 75 gew.-%ige Lösung in Isododecan |
| 2,00 g | Dilaurylperoxid |
| 40,00 g | Cyclohexan |

Zulauf 2a wurde in der gleichen Weise wie die Zuläufe 1 und 2 dem Reaktor durch den Homogenisator zugeführt.

Die Partikel hatten eine Teilchengröße zwischen 2 und 15 µm. Es wurde kein Koagulat gefunden.

Es wurden demnach partikelförmige Polymerisate P aus einem Kern aus vernetztem Polybutylacrylat und einer Schale aus Polystyrolacrylnitril hergestellt.

Die Beispiele belegen die Flexibilität des erfindungsgemäßen Zulaufverfahrens: Es wurde entweder die Gesamtmenge der Komponenten für den Kern vor der Polymerisation emulgiert (Bsp. 1 und 2) oder die Komponenten für den Kern wurden kontinuierlich emulgiert (Bsp. 3 und 4). Die Polymerisationsinitiatoren wurden entweder mit emulgiert und vorgelegt (Bsp. 1 und 3) oder während der Polymerisation kontinuierlich zugegeben (Bsp. 2 und 4).

## Patentansprüche

1. Verfahren zur Herstellung eines partikelförmigen Polymerisates P mit einem mittleren Teilchendurchmesser d₅₀ von 0,1 bis 50 µm, bei dem aus
- einem oder mehreren Monomeren M, die durch radikalische Polymerisation zu dem Polymerisat P polymerisierbar sind,
- Wasser, und
- mindestens einem Schutzkolloid SK
durch Einwirkung hoher Scherkräfte eine Emulsion E hergestellt wird und in einem Reaktor die Emulsion E unter Verwendung eines radikalischen Polymerisationsinitiators RI, einer Polymerisation unterworfen wird,
**dadurch gekennzeichnet, daß**,
bezogen auf die Emulsion E, höchstens 75 Gew.-% der Emulsion E ("vorgelegter Anteil von E") zu Beginn der Polymerisation in dem Reaktor vorgelegt werden, und mindestens 25 Gew.-% der Emulsion E ("Zulaufanteil von E") erst nach Beginn der Polymerisation dem Reaktor zugeführt werden, und daß die hohen Scherkräfte erzeugt werden durch Homogenisatoren, die bei Drehzahlen von 1000 bis 25 000 min⁻¹ betrieben werden, durch Einwirkung von Ultraschall, durch Hindurchpressen einer Mischung aus Monomeren M, Wasser und Schutzkolloiden SK unter hohem Druck durch einen engen Spalt oder Düsen kleinen Durchmessers, durch Kolloidmühlen oder durch mehrere dieser Maßnahmen.

2. Verfahren nach Anspruch 1, **dadurch gekennzeichnet, daß** der Zulaufanteil von E in einem Zeitraum von mindestens 10 min dem Reaktor zugeführt wird.

3. Verfahren nach Anspruch 1 oder 2, **dadurch gekennzeichnet, daß** die Monomeren M zu mindestens 50 Gew.-% aus einem oder mehreren C₁- bis C₁₂-Alkylestern der Acrylsäure oder der Methacrylsäure bestehen.

4. Verfahren nach Anspruch 1 bis 3, **dadurch gekennzeichnet, daß** als Monomere M n-Butylacrylat oder Ethylhexylacrylat oder deren Mischungen, und eines oder mehrere vernetzende, polyfunktionelle Monomere, verwendet werden.

5. Verfahren nach Anspruch 1 bis 4, **dadurch gekennzeichnet, daß** das Schutzkolloid SK einen oder mehrere Polyvinylalkohole enthält.

6. Verfahren nach Anspruch 1 bis 5, **dadurch gekennzeichnet, daß** vor oder während der Herstellung der Emulsion E als Zusatzstoffe Polymere, Farbstoffe oder Pigmente, ferromagnetische Pigmente, oder andere Zusatzstoffe in gelöster, gequollener oder suspendierter Form zugegeben werden.

7. Verfahren nach Anspruch 1 bis 6, **dadurch gekennzeichnet, daß** die Polymerisation bis zu einem Umsatz von mindestens 25 %, bezogen auf die eingesetzten Monomeren M, geführt wird, wonach eines oder mehrere weitere Monomere M* zugegeben und polymerisiert werden, wobei Kern-Schale-Teilchen entstehen.

8. Verfahren nach Anspruch 1 bis 7, **dadurch gekennzeichnet, daß** die weiteren Monomeren M* in mehreren Polymerisationsstufen nacheinander zugegeben werden und in jeder Polymerisationsstufe die Monomeren M* bis zu einem Umsatz von mindestens 25 %, bezogen auf die in der jeweiligen Stufe eingesetzten Monomeren M*, polymerisiert werden, bevor in der nächsten Polymerisationsstufe wiederum Monomere M* zugegeben werden, wobei Kern-Schale-Teilchen mit mehreren Schalen entstehen.

9. Verfahren nach Anspruch 1 bis 8, **dadurch gekennzeichnet, daß** als weitere Monomere M* Styrol, α-Methylstyrol, Acrylnitril, Methacrylnitril, Methylmethacrylat oder deren Mischungen verwendet werden.

## Claims

1. A process for the preparation of a particulate polymer P having an average particle diameter d₅₀ of from 0.1 to 50 µm, in which an emulsion E is prepared from
- one or more monomers M, which are polymerizable by free radical polymerization to give the polymer P,
- water, and
- at least one protective colloid PC
by the action of high shear forces, and the emulsion E is subjected to polymerization in a reactor with the use of a free radical polymerization initiator RI,
wherein based on the emulsion E, not more than 75% by weight of the emulsion E ("initially taken portion of E") are initially taken in the reactor at the beginning of the polymerization and at least 25% by weight of the emulsion E ("feed portion of E") are not fed to the reactor until after the beginning of the polymerization, and wherein the high shear forces are generated by homogenizers which operate at speeds of from 1000 to 25 000 rpm, by the action of ultrasound, by forcing a mixture of monomers M, water and protective colloids PC under high pressure through a narrow slot or nozzles of small diameter, by colloid mills or by a number of these measures.

2. A process as claimed in claim 1, wherein the feed portion of E is fed to the reactor in a period of at least 10 minutes.

3. A process as claimed in claim 1 or 2, wherein at least 50% by weight of the monomers M comprise one or more C₁-C₁₂-alkyl esters of acrylic acid or methacrylic acid.

4. A process as claimed in any of claims 1 to 3, wherein n-butyl acrylate or ethylhexyl acrylate or mixtures thereof and one or more crosslinking, polyfunctional monomers are used as monomers M.

5. A process as claimed in any of claims 1 to 4, wherein the protective colloid PC contains one or more polyvinyl alcohols.

6. A process as claimed in any of claims 1 to 5, wherein polymers, dyes or pigments, ferromagnetic pigments or other additives in dissolved, swollen or suspended form are introduced as additives before or during the preparation of the emulsion E.

7. A process as claimed in any of claims 1 to 6, wherein the polymerization is carried out to a conversion of at least 25%, based on the monomers M used, after which one or more further monomers M* are added and polymerized, core-shell particles being formed.

8. A process as claimed in any of claims 1 to 7, wherein the further monomers M* are added in succession in a plurality of polymerization stages and, in each polymerization stage, the monomers M* are polymerized to a conversion of at least 25%, based on the monomers M* used in the respective stage, before monomers M* are again added in the next polymerization stage, core-shell particles having a plurality of shells being formed.

9. A process as claimed in any of claims 1 to 8, wherein styrene, α-methylstyrene, acrylonitrile, methacrylonitrile, methyl methacrylate or mixtures thereof are used as further monomers M*.

## Revendications

1. Procédé de préparation d'un polymère particulaire P d'une dimension particulaire moyenne d₅₀ de 0,1 à 50 µm, dans lequel, à partir de:
- un ou plusieurs monomères M, qui sont polymérisables par polymérisation radicalaire en le polymère P,
- de l'eau, et
- au moins un colloïde protecteur SK
sous l'action de hautes forces de cisaillement, on prépare une émulsion E et l'on soumet l'émulsion E, dans un réacteur, à une polymérisation en utilisant un initiateur de polymérisation radicalaire RI,
**caractérisé en ce que**,
par rapport à l'émulsion A, on charge dans le réacteur un maximum de 75% en poids de l'émulsion ("fraction de départ de E") au début de la polymérisation, et on n'ajoute au moins 25% en poids de l'émulsion E ("fraction d'apport de E") dans le réacteur qu'après le début de la polymérisation, et que les hautes forces de cisaillement sont produites par des homogénéiseurs fonctionnant à des vitesses de rotation de 1000 à 25.000 min.⁻¹, par l'action d'ultrasons, par compression d'un mélange de monomères M, d'eau et de colloïdes protecteurs SK sous haute pression via une fente étroite ou des filières de faible diamètre, par des moulins à colloïdes ou par plusieurs de ces mesures.

2. Procédé selon la revendication 1, **caractérisé en ce que** l'apport progressif de E est ajouté dans le réacteur en un laps de temps d'au moins 10 minutes.

3. Procédé selon la revendication 1 ou 2, **caractérisé en ce que** les monomères M sont constitués à au moins 50% en poids d'un ou plusieurs alkylesters en C₁ à C₁₂ de l'acide acrylique ou de l'acide méthacrylique.

4. Procédé selon les revendications 1 à 3, **caractérisé en ce que** l'on utilise comme monomères M de l'acrylate de n-butyle ou de l'acrylate d'éthylhexyle, ou leurs mélanges, et un ou plusieurs monomères réticulants polyfonctionnels.

5. Procédé selon les revendications 1 à 4, **caractérisé en ce que** le colloïde protecteur SK contient un ou plusieurs poly(alcools vinyliques).

6. Procédé selon les revendications 1 à 5, **caractérisé en ce que**, avant ou pendant la préparation de l'émulsion E, on ajoute en tant qu'additifs de polymères, des colorants ou des pigments, des pigments ferromagnétiques, ou d'autres additifs, sous forme dissoute, gonflée ou en suspension.

7. Procédé selon les revendications 1 à 6, **caractérisé en ce que** la polymérisation est effectuée jusqu'à un taux de conversion d'au moins 25%, par rapport aux monomères M mis en oeuvre, après quoi l'on ajoute un ou plusieurs autres monomères M* et l'on opère la polymérisation, d'où il se forme des particules à structure noyau - gaine.

8. Procédé selon les revendications 1 à 7, **caractérisé en ce que** les autres monomères M* sont ajoutés successivement dans plusieurs étapes de polymérisation et que, dans chaque étape de polymérisation, les monomères M* sont polymérisés jusqu'à un taux de conversion d'au moins 25%, par rapport aux monomères M* mis en oeuvre dans les étapes respectives, avant que l'on ajoute à nouveau des monomères M* dans l'étape de polymérisation suivante, ce qui forme des particules à structure noyau - gaine avec plusieurs gaines.

9. procédé selon les revendications 1 à 8, **caractérisé en ce que** l'on utilise comme autres monomères M* du styrène, de l'αméthylstyrène, de l'acrylonitrile, du méthacrylonitrile, du méthacrylate de méthyle ou leurs mélanges.
